# NEW EUROPEAN PATENT SPECIFICATION

(11) **EP 0 692 999 B2**
(45) Date of publication and mention of the opposition decision: **08.06.2005**
(45) Mention of the grant of the patent: 18.12.1996
(21) Application number: 94911965.5
(22) Date of filing: 05.04.1994
(51) Int. Cl.: B01J 8/26, F22B 31/00, F23C 10/00, F23M 5/08

(54) **A FLUIDIZED BED REACTOR SYSTEM AND A METHOD OF MANUFACTURING THE SAME**
WIRBELBETTREAKTORSYSTEM UND METHODE ZU DESSEN HERSTELLUNG
SYSTEME DE REACTEUR A LIT FLUIDISE ET PROCEDE DE FABRICATION

(30) Priority: 05.04.1993 US 41571; 05.04.1993 US 41580
(43) Date of publication of application: 24.01.1996
(73) Proprietor: Foster Wheeler Energia Oy, 00440 Helsinki (FI)
(72) Inventor: HYPPÄNEN, Timo, FIN-48710 Karhula (FI)
(74) Representative: Füchsle, Klaus, Dipl.-Ing.
(86) International application number: PCT/FI1994/000132
(87) International publication number: WO 1994/022571

(56) References cited:
- EP-A- 0 243 156
- EP-A- 0 497 528
- EP-A- 0 568 448
- US-A- 389 426
- US-A- 3 893 426
- US-A- 4 716 856
- US-A- 4 823 740
- US-A- 4 947 804
- US-A- 5 040 492
- US-A- 5 140 950

## Description

The present invention relates to an apparatus, a fluidized bed reactor system, including a reactor chamber defined by a wall structure formed by a plurality of tubes and means for passing heat transfer medium through said tubes to apply heat to said tubes. A fast fluidized bed of solid material is established in the reactor chamber. A solid material processing chamber is disposed adjacent the reactor chamber, on the outer side of the wall structure defining said reactor chamber for e.g. recovering heat from the solid material. The processing chamber shares a common wall portion with the reactor chamber and a slow fluidized bed of solid material is provided in the processing chamber.

The present invention also relates to a method of manufacturing a common wall portion between a circulating fluidized bed reactor and a processing chamber adjacent the circulating fluidized bed reactor, wherein particle passage openings are provided in a wall structure of a fluidized bed reactor chamber. According to the invention the processing chamber may be arranged for processing particles of the circulating fluidized bed in the processing chamber so that particles may be introduced into the processing chamber and back to the circulating fluidized bed to an adequate extent. The method according to the present invention provides a robust wall structure between the processing chamber and the fluidized bed reactor chamber.

The fast or circulating fluidized bed reactors are used in a variety of different combustion, heat transfer, chemical or metallurgical processes. In combustion processes particulate fuel such as coal, coke, lignite, wood, waste or peat, as well as other particulate matter such as sand, ash, sulfur absorbent, catalyst or metal oxides can be the constituents of the fluidized bed. The nominal velocity in the combustion chamber is usually in the range of 3,5 to 10 m/s, but it may be substantially higher.

Typically heat is recovered from fluidized bed combustion processes by heat transfer surfaces in the combustion chamber and in the convection section arranged in the gas pass after the particle separator. In circulating fluidized bed (CFB) combustors or boilers the peripheral walls of the combustion chamber are usually made as membrane walls in which vertical tubes are combined by flat plate material or fins to form evaporating surfaces. Additional heat transfer surfaces such as superheaters are arranged within the freeboard region in the upper part of the combustion chamber and in the convection section thereafter for superheating the steam.

Superheating at low load often constitutes a problem. The combustion chamber exit gas temperature decreases with decreasing the load and the superheaters in the convection section do not have enough capacity to provide the desired results. Additional superheaters arranged in the freeboard region within the combustion chamber, on the other hand, would increase costs and control problems. Additional heat transfer surfaces within the freeboard region would further decrease the temperature of the flue gas still containing unburned fuel to, e.g. 700 to 750 °C, which would have a negative effect on NO_{X} and N₂O reduction.

It has, on the other hand, not earlier been possible in CFB reactors to arrange additional heat transfer surfaces in the lower part of the combustion chamber. In a conventional dense zone of a fast fluidized bed heat transfer surfaces would at a high temperature be exposed to a very high velocity (3,5 - 10 m/s or even higher) particle suspension flow causing severe corrosion and erosion problems. Any heat transfer surface arranged within such surroundings in a combustion chamber would have to be made of expensive heat resistant material and be protected by some erosion resistant material. Such heat transfer surfaces would be very heavy and expensive.

Especially in pressurized applications it is even less desirable to have to add heat transfer surfaces in the freeboard region. The combustion chambers are small and heat transfer surfaces are already disposed very close to each other and a very compact arrangement of heat transfer surfaces would prevent horizontal mixing of bed material within the combustion chamber and result in decreased combustion efficiency. Further, it is not desirable to have the size of the combustion chamber increased, as it leads to a need to increase the size of the pressure vessel, as well.

In fast fluidized bed reactors there is an internal circulation of solid material within the combustion chamber. The bed material is in a continuous turbulent upward and downward motion. The finer the particles, the more easily they flow upward in the combustion chamber. Therefore, a fractionation of solids takes place in the combustion chamber. A dense solid particle fraction, including larger objects, is formed in the lower part of the combustion chamber. The large objects in the dense solid particle fraction would have a negative effect on the heat transfer in the lower part of the combustion chamber, due to a decreased heat transfer efficiency and a tendency to clog the spaces between the heat transfer surfaces.

It has been suggested in US 5,005,528 and US 4,823,740 to divide a bubbling slow fluid bed with partition walls into a central combustion zone and peripheral heat transfer zones with decreased fluidization velocity, for heat recovery in the lower part of the combustion chamber. It has further been suggested in US 5,060,599 to form within the combustion chamber in a fast fluidized bed reactor one or several pockets, with cooling surfaces therein. The pockets are separated from the combustion chamber by separate partition wall and have upward opening mouths. Only solid particles flowing downward along the cooled side walls are guided to flow into the pockets.

Many problems arise during construction as well as later when partition walls are built into hot surroundings in fluidized bed combustion chambers. Heat and erosion as such and especially as a combination, tend to cause problems, such as thermal expansion and stress. Any obstacles or internal constructions within combustion chambers have to be made of heat resistant materials, which means that heavy and expensive constructions have to be used. Cooled constructions, on the other hand, are difficult to connect to reactor constructions without problems with different thermal expansion of different parts of the constructions. Supporting of the partition wall causes a number of problems due to the heavy stuctures and different thermal expansion properties of the wall structure and the reaction chamber structures.

It is an object of the present invention to provide a method and an apparatus in a fluidized bed reactor system in which the above mentioned drawbacks are minimized.

It is also an object of the present invention to provide an apparatus, a fluidized bed reactor, with a processing chamber in conjunction with the reaction chamber, in which apparatus the wall between the reaction chamber and the processing chamber has a robust structure still having a sufficient opening area for allowing the introduction of an adequate amount of particulate material from the fluidized bed into the processing chamber.

It is also an object of the present invention to provide a method of manufacturing a fluidized bed reactor with a processing chamber sharing a rigidly supported common wall.

According to the present invention there is provided a fluidized bed reactor system according to the claim 1.

According to the present invention there is provided a method according to claim 14.

According to a preferred embodiment of the present invention the common wall between the fluidized bed reactor chamber and the processing chamber is arranged to have an adequate open area for introducing particles from the fluidized bed into the processing chamber. According to the present invention the wall is provided with vertically extending cooling conduits within the wall structure. The cooling conduits strengthen the wall structure and form a part of the support structure on which the reaction chamber is suspended. The cooled conduits form a robust structure by cooling the wall thus substantially eliminating any thermal expansions between the wall and the reactor structures and simultaneously suspending the reactor structures as well.

Preferably a fast fluidized bed of solid particles in normal atmospheric Circulating Fluidized Bed reactor (CFB), having a nominal velocity above the grid > 3,5 m/s, preferably > 5 m/s, is established in the reactor chamber and a gently bubbling bed of solid particles having a nominal velocity < 1 m/s, preferably 0,2 - 0,6 m/s, is established in the processing chamber.

The fast bed of solid particles induces an internal circulation of solid particles in the reactor chamber, solid particles flowing mainly upward in the middle of the reactor chamber and downward along the side walls thereof. Additionally solid particles move horizontally causing an effective mixing of particles in the reactor chamber. Mainly fine solid particles are transported by fluidizing gas to the upper parts of the reactor chamber and then flow downward along the walls or laterally in the reactor chamber, whereas coarse particles gather in the bottom portion of the reactor chamber.

The finer solid particles flowing along or towards the side walls, particularly the common wall portion thereof, are according to the present invention introduced into the processing chamber through openings provided in the common wall portion. Heat transfer surfaces are according to a preferred embodiment of the invention disposed in the processing chamber for cooling the solid material introduced thereinto before recycling the solid material into the reactor chamber.

Within the processing chamber the slowly bubbling bed moves slowly downward as solid material therefrom is reintroduced into the fast fluidized bed in the reactor chamber and new solid material is continuously added to the upper part of the bubbling bed.

The openings in the common wall portion may be of a size allowing only particles smaller than a predetermined size to flow therethrough, thereby controlling the size of the solid bed particles in the processing chamber.

The common wall portion of the processing chamber may be formed to gather solid particles from a large area along a side wall in the reactor chamber and guide these solid particles toward the openings in the common wall portion.

The processing chamber may according to a most preferred embodiment of the present invention be disposed adjacent the lowermost part of the reactor chamber. The lowermost part has in some fluidized bed reactor systems downward inwardly inclined side walls.

The processing chamber may be disposed at a higher level adjacent any of the upright side walls of the reactor chamber. The processing chamber is, however, preferably formed adjacent the lower half of a side wall in the reactor chamber. At higher levels solid particle density would usually be too low to provide enough material for the processing chamber in normal atmospheric circulating fluidized bed reactor systems.

The processing chamber may naturally be positioned also at a higher location if the conditions in the CFB are favourable. Fluidization velocity, particle density, grain size and other features of the CFB have their effect on the conditions in the fluididized bed, and e.g. in the pressurized circulating fluidized bed reactor the processing chamber may as well be positioned at an upper level.

In case the processing chamber is positioned e.g. at an upper location of the reaction chamber where the reaction chamber walls are substantially vertical.

Several processing chambers may be formed e.g. at two or more levels, if desired, for providing optimal control possibilities.

Different types of controlling means may be arranged in the processing chamber or in the openings in the common wall for controlling the heat transfer and the recycling of the solid material from the processing chamber into the reactor chamber. Means for controlling the bed level, the fluidization velocity or the flow of material within the processing chamber may be used for controlling heat transfer in the processing chamber. The bed level may be controlled by means of controlling the recycling of bed material, e.g. by overflow back to the reactor chamber. The bed level may also be controlled by controlling the fluidizing air in the outlet or in the vicinity thereof openings recycling solid material from the processing chamber to the reactor chamber. The outlet openings are preferably provided in the common wall portion at a level below the inlet openings.

The wall structure of the reactor chamber is according to a preferred embodiment of the present invention formed of parallel vertical tubes combined by fins forming a gas tight structure, the common wall portion between the reactor chamber and the processing chamber thereby being formed as well of parallel vertical tubes combined by fins. Openings may easily be formed in such a wall portion by bending some of the tubes according to the present invention to form the necessary openings and leaving other tubes unbent to form wall portions between the openings according to the present invention.

Moreover, the present invention enables the common wall structure to have an adequate open area and also an adequate cooling facility in the common wall portion surrounding the open area and thus providing a rigid and efficiently supported wall portion.

Tubes at the location of the opening may according to a preferred embodiment of the invention be bent out of the plane of the common wall portion and away from the reactor chamber for thus forming an opening in the common wall portion. And, in order to have an adequate open area and still an adequate cooling facility several openings are provided spaced from each other so that a cooling conduit supporting and cooling the wall portion between the openings is provided in the wall.

The portions of the tubes bent out of the plane of the common wall may also form part of boundary walls of the processing chamber.

Tubes may according to a preferred embodiment of the invention be bent out of the plane of the common wall portion and away from the reactor chamber for thus forming openings in the common wall portion. The portions of the tubes bent out of the plane of the common wall may thereby form boundary walls of the processing chamber.

Two or preferably more substantially parallel vertical inlet openings are according to a preferred embodiment of the invention provided substantially at the same horizontal level in the common wall portion of the processing chamber. The ratio of the height and width of the vertical inlet openings is preferably greater than 2.

A vertical opening may be an "opening column" or a stack of superimposed separate openings on top of each other, which "opening column" or stack of openings functions as one unitary opening. The "opening column" or the stack of openings is functionally comparable with a single opening with a continous opening area.

In that manner a well supported common wall portion is provided. The at least two openings are arranged within a distance from each other so that an adequate amount of cooling conduits may be provided in the wall between the openings for supporting the common wall structure and cooling the wall. Being a cooled structure, the common wall portion has a substantially equal thermal expansion with the reaction chamber structures and has cooling conduits for supporting the wall and other possible structures suspended from the wall. The distance between the openings is preferably selected so that the ratio of the height of the vertical inlet opening and the distance is preferably greater than 2.

One of the main advantages of the present invention, according to which heat transfer surfaces are disposed in a slowly bubbling fluidized bed of fine particles, is that it combines the benefits of good combustion efficiency and low emissions of fast fluidized beds such as CFB reactors and high heat transfer efficiency as well as low erosion and corrosion tendencies of slowly bubbling fluidized beds. The present invention provides low erosion in the bubbling bed e.g. due to fractionation of particles in the CFB resulting the particles in the bubbling bed to be of substantially finer grain size compared to conventional bubbling bed systems.

A further advantage of the present invention is that it makes it very simple to transport hot solid material from a main reactor chamber with a fast fluidized bed into an adjacent processing chamber with a bubbling bed for recovering heat therefrom with heat transfer surfaces disposed in the bubbling bed. It is according to the present invention not necessary to circulate the hot solid material to the uppermost part of the reactor chamber, discharge the material, separate the material from the flue gases and thereafter recover heat therefrom in a separate heat recovery unit before recirculating the material into the reactor chamber.

Further, according to the present invention only very small changes have to be done in the conventional reactor design in order to connect a processing chamber thereto. The present partition wall (common wall portion) between the processing chamber and the reactor chamber is a rigidly supported structure, being a part of the side walls of the reactor chamber, i.e. the tubing of the reactor chamber. Also thermal expansion problems have been minimized as the wall between the reactor chamber and the processing chamber is a common wall portion of the main reactor chamber wall and not a separate partition wall having to be connected to the main wall. The common wall is a rather light structure compared to earlier separate partition walls being completely made of heavy refractory material.

The present invention may be utilized in fluidized bed boilers used e.g. in combustion, gasification or hot gas cleaning or cooling processes, i.e. processes providing energy for steam generation. In boilers the side walls are made of steam generation tubes or e.g. superheaters.

In many processes it may be advantageous to arrange the superheaters in the adjacent processing chamber.

Further features and advantages of the present invention will be more fully appreciated by reference to the following detailed description of the drawings, and from appended claims.
- FIG. 1: is a schematical perspective vertical cross sectional view of the lower part of a fast fluidized bed reactor constructed in accordance with a first preferred exemplary embodiment of the present invention;
- FIG. 2: is an enlarged schematic front view of the tubing at the common wall portion around two openings; and
- FIG. 3: is an enlarged schematic view of the tubing along line AA in FIG. 3;

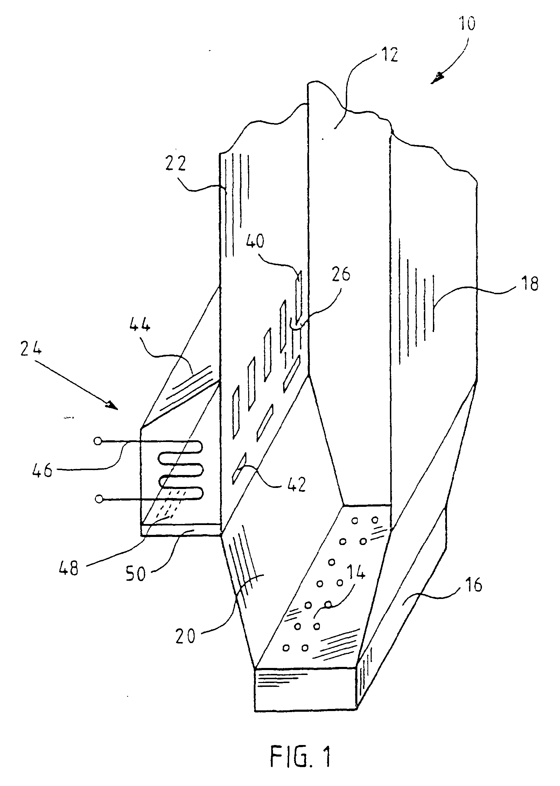

FIG. 1 shows a fast fluidized bed reactor 10 having a combustion chamber 12, a grid 14 and a windbox 16 for introducing fluidizing air into the combustion chamber. The reactor 10 further includes sidewalls 18 having inclined lower portions 20 and upright upper portions 22.

A fluidized bed of solid particles, not shown, is formed in the combustion chamber 12. The bed of solid particles is fluidized so that it has a velocity of > 3,5 m/s, preferably > 5 m/s, above the grid 14. Thus a suspension of flue gas and a considerable amount of solid particles will flow upwards in the combustion chamber.

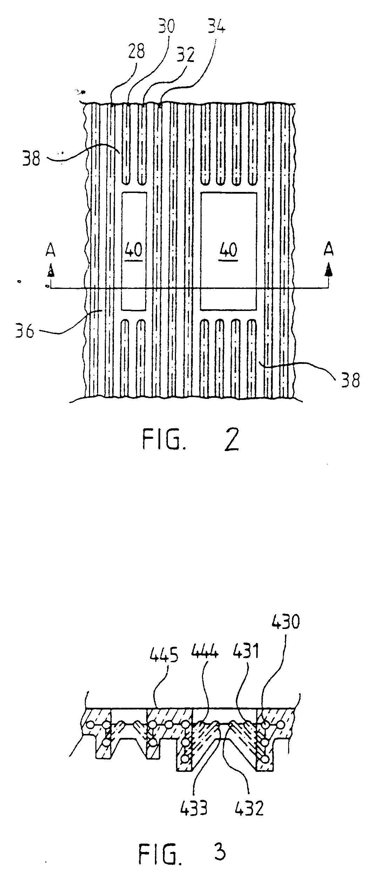

A processing chamber 24 according to the present invention is disposed adjacent the combustion chamber 12 on the outer side of an upper side wall 22. The combustion chamber 12 and the processing chamber 24 have one wall portion 26 in common. The walls 18 including the common wall portion 26 are made of membrane panels or of other similar tube construction, i.e. of vertical tubes 28, 30, 32, 34 combined one to another by fins 36 and 38, as can be seen in FIG. 2.

Several openings 40 at the same horizontal level have been made in the wall tubing at the common wall portion 26. The openings 40, as can be seen from FIG. 2, are made by bending tubes 30 and 32 away from the plane of the wall, and the openings 40 are made between the bent portions of tubes 30 and 32. The space for openings 42 may be made in a similar manner as for openings 40. The tubing, tubes and fins, around the openings 40 is preferably lined with a protective layer of refractory or other suitable material. Openings 40 all in all form an adequate open area for transferring particulates from the combustion chamber 12 into the processing chamber 24. Openings 40 may be arranged horizontally at equal mutual distances along the entire length of the common wall portion above the upper surface of the slowly bubbling fluidized bed. If desired, the openings may be arranged in groups, the distance between openings within a group being smaller than the distance between the groups. In order to have the common wall portion cooled and firmly supported, the openings 40 have been made to have the ratio of height and width greater than 2 and they are also spaced from each other. The solid wall portion between the openings 40 has tubes extending in the plane of the wall through the common wall portion 26 so that the wall is firmly supported and cooled. Openings 42 are made for returning the processed particles from the processing chamber back into the combustion chamber, and therefore openings 42 have been made as controllable particle transport means, having an active controlling system or the introduction being automatically controlled by other means.

The openings 40 and 42 may be formed by an arrangement shown in FIGs. 2 and 3. The tubes 431, 432, 433 and 434 have been bent away from the plane of the common wall portion, behind the edge tube 430 of an opening 40 so that the common wall portion remains as a rigid construction being capable of receiving the stress of suspending the combustion chamber constructions. In order to simultaneously maintain adequate cooling facilities in the wall portion and still provide an adequate open area for transporting particulate material from the combustion chamber into the processing chamber, a required amount of cooled structures in the vicinity of the openings is provided between the openings in wall portion 445.

The outer walls 44 of the processing chamber are also preferably made of cooled panels and connected to the walls of the combustion chamber. The processing chamber includes heat transfer surfaces 46 for cooling solid material being introduced into the processing chamber through openings 40.

A slowly bubbling fluidized bed of solid particles is established in the processing chamber by introducing fluidizing air or gas through grid 48 from the wind box 50.

## Claims

1. A fluidized bed reactor system including
- a reactor chamber defined by a wall structure formed by a plurality of tubes and means for passing heat transfer medium through said tubes to apply heat to said tubes;
- a fast fluidized bed of solid material in the reactor chamber;
- a solid material processing chamber disposed adjacent the reactor chamber on the outer side of the wall structure defining said reactor chamber, and having inlet openings;
- a slow fluidized bed of solid material in the processing chamber;
wherein
- the solid material processing chamber is sharing with said reactor chamber a common wall portion of the wall structure defining said reactor chamber, and the common wall portion of the wall structure having at least two inlet openings, being formed between tubes forming the wall structure, extending therethrough, for introducing solid material directly from the fast fluidized bed in the reactor chamber into the slow fluidized bed in the processing chamber;
- the tubes of the common wall forming a part of the support structure on which the reactor chamber is suspended;
- the wall structure is formed of consecutive first and second portions of vertical tubes,
- said first portions of vertical tubes at the common wall portion are bent out of the plane of said common wall portion for forming inlet openings in said common wall portion between the remaining second portions of the vertical tubes in the plane of said common wall portion.

2. Fluidized bed reactor system according to claim 1, wherein
- the wall structure is formed of consecutive first and second portions of vertical tubes combined by fins, and
- said first portions of tubes at the common wall portion are bent out of the plane of said common wall portion and away from the reactor chamber for forming inlet openings in said common wall portion between the remaining second portions of the tubes in the plane of said common wall portion.

3. Fluidized bed reactor system according to claim 2, wherein the first portions of tubes being bent out of the plane of the common wall portion form boundary walls in the processing chamber.

4. Fluidized bed reactor system according to claim 1, wherein a plurality of substantially parallel vertical inlet openings are formed at the same horizontal level in the common wall portion.

5. Fluidized bed reactor system according to claim 4, wherein the ratio of the height and width of said vertical inlet openings is greater than 2.

6. Fluidized bed reactor system according to claim 1, wherein heat transfer surfaces are disposed in the slow fluidized bed of solid particles in the processing chamber.

7. Fluidized bed reactor system according to claim 1, wherein a refractory lining is provided around the inlet openings.

8. Fluidized bed reactor system according to claim 1, wherein the inlet openings are disposed in an inclined portion of the common wall.

9. Fluidized bed reactor system according to claim 1, wherein outlet openings are formed through the common wall portion for recycling processed solid material by overflow from the processing chamber to the reactor chamber.

10. Fluidized bed reactor system according to claim 1, wherein outlet openings are formed through the lowermost part of the common wall portion for recycling processed solid material from the processing chamber to the reactor chamber.

11. Fluidized bed reactor system according to claim 9 or 10, wherein controlling means are disposed in the processing chamber for controlling the recycling of solid material from the processing chamber to the reactor chamber.

12. Fluidized bed reactor system according to claim 9 or 10, wherein controlling means are disposed in the outlet openings for controlling the recycling of solid material from the processing chamber to the reactor chamber.

13. Fluidized bed reactor system according to claim 4 wherein the inlet openings are spaced so that the distance between two openings is determined by the ratio between the height of the opening and the distance between two openings which is greater than 2.

14. A method of manufacturing, in a circulating fluidized bed reactor which includes a reactor chamber defined by a wall structure formed of a plurality of tubes, a common wall portion forming a part of the support structure on which the reactor chamber is suspended, between the circulating fluidized bed reactor chamber and a processing chamber adjacent the circulating fluidized bed reactor chamber, the common wall portion defining a plane being provided with first and second portions of vertical steam generating tubes, both the first and the second portions comprises at least two steam generating tubes, wherein the method comprises the steps of:
a) bending said first portion of the tubes at the common wall portion out of the plane of said common wall portion at a first vertical location, for forming inlet openings in said common wall portion for allowing direct introduction of solid material from the circulating fluidized bed reactor chamber into the processing chamber;
b) bending said first portion of the tubes at the common wall portion back to the plane of said common wall portion at a second vertical location above the first vertical location;
c) practising the steps a) and b) at several horizontal positions having a distance between the positions for said second portions to extend over the first and the second vertical locations in the plane of the common wall portion between the positions. between the positions.

15. Method according to claim 14, comprising a step of selecting the width of said first portion so that the ratio of the distance between said second and first location and the width of the first portion is greater than 2.

16. Method according to claim 14, comprising a step of selecting the width of said second portion so that the ratio of the distance between said second and first location and the width of the second portion is greater than 2.

## Patentansprüche

1. Wirbelschichtreaktor-System bestehend aus
- einer Reaktionskammer, die durch eine Wandkonstruktion gebildet wird, die durch eine Vielzahl von Rohren und Mitteln zur Leitung von Wärmeträger durch die Rohre gebildet wird, um Wärme an die Rohre abzugeben;
- einer schnellen Wirbelschicht aus Feststoff in der Reaktionskammer;
- einer Feststoff-Behandlungskammer, die neben der Reaktionskammer auf der Außenseite der die Reaktionskammer bildenden Wandkonstruktion angeordnet ist und Einlaßöffnungen aufweist;
- einer langsamen Wirbelschicht aus Feststoff in der Behandlungskammer;
**dadurch gekennzeichnet, daß**
- die Feststoff-Behandlungskammer mit der Reaktionskammer einen gemeinsamen Wandabschnitt der die Reaktionskammer bildenden Wandkonstruktion teilt, und der gemeinsame Wandabschnitt der Wandkonstruktion zumindest zwei Einlaßöffnungen hat, die zwischen den die Wandkonstruktion bildenden Rohren ausgebildet sind und sich **dadurch** erstrecken zur direkten Einführung festen Materials aus der schnellen Wirbelschicht in der Reaktionskammer in die langsame Wirbelschicht in der Behandlungskammer;
- die Rohre des gemeinsamen Wandabschnitts einen Teil der Stützkonstruktion bilden, an der die Reaktionskammer aufgehängt ist,
- die Wandkonstruktion aus aufeinanderfolgenden ersten und zweiten Abschnitten vertikaler Rohre gebildet wird,
- die ersten Abschnitte vertikaler Rohre am gemeinsamen Wandabschnitt aus der Ebene des gemeinsamen Wandabschnitts herausgebogen sind, um Einlaßöffnungen im gemeinsamen Wandabschnitt zwischen den restlichen zweiten Abschnitten der vertikalen Rohre in der Ebene des gemeinsamen Wandabschnittes zu bilden.

2. Wirbelschichtreaktor-System nach Anspruch 1,
**dadurch gekennzeichnet, daß**
- die Wandkonstruktion aus aufeinanderfolgenden ersten und zweiten Abschnitten vertikaler über Flossen miteinander verbundener Rohre gebildet wird, und
- die ersten Rohrabschnitte am gemeinsamen Wandabschnitt aus der Ebene des gemeinsamen Wandabschnitts heraus und von der Reaktionskammer weg gebogen sind, um Einlaßöffnungen im gemeinsamem Wandabschnitt zwischen den restlichen zweiten Rohrabschnitten in der Ebene des gemeinsamen Wandabschnitts zu bilden.

3. Wirbelschichtreaktor-System nach Anspruch 2, **dadurch gekennzeichnet, daß** die ersten Rohrabschnitte, die aus der Ebene des gemeinsamen Wandabschnitts herausgebogen sind, Umfassungswände der Behandlungskammer bilden.

4. Wirbelschichtreaktor-System nach Anspruch 1, **dadurch gekennzeichnet, daß** eine Vielzahl im wesentlichen paralleler vertikaler Einlaßöffnungen auf der gleichen horizontalen Ebene im gemeinsamen Wandabschnitt ausgebildet sind.

5. Wirbelschichtreaktor-System nach Anspruch 4, **dadurch gekennzeichnet, daß** das Verhältnis Höhe zu Breite der vertikalen Einlaßöffnungen größer als 2 ist.

6. Wirbelschichtreaktor-System nach Anspruch 1, **dadurch gekennzeichnet, daß** Wärmetauschflächen in der langsamen Wirbelschicht aus festen Partikeln in der Behandlungskammer angeordnet sind.

7. Wirbelschichtreaktor-System nach Anspruch 1, **dadurch gekennzeichnet, daß** eine feuerfeste Auskleidung rund um die Einlaßöffnungen vorgesehen ist.

8. Wirbelschichtreaktor-System gemäß Anspruch 1, **dadurch gekennzeichnet, daß** die Einlaßöffnungen in einem geneigten Abschnitt der gemeinsamen Wand angeordnet sind.

9. Wirbelschichtreaktor-System nach Anspruch 1, **dadurch gekennzeichnet, daß** durch Auslaßöffnungen den gemeinsamen Wandabschnitt zur Rückführung behandelten Feststoffs via Überlauf aus der Behandlungskammer in die Reaktionskammer ausgebildet sind.

10. Wirbelschichtreaktor-System nach Anspruch 1, **dadurch gekennzeichnet, daß** Auslaßöffnungen durch den untersten Teil des gemeinsamen Wandabschnitts zur Rückführung behandelten Feststoffs aus der Behandlungskammer in die Reaktionskammer ausgebildet sind.

11. Wirbelschichtreaktor-System nach Anspruch 9 oder 10, **dadurch gekennzeichnet, daß** in der Behandlungskammer Regelungsmittel zur Regulierung der Rückführung von Feststoff aus der Behandlungskammer in die Reaktionskammer angeordnet sind.

12. Wirbelschichtreaktor-System nach Anspruch 9 oder 10, **dadurch gekennzeichnet, daß** in den Auslaßöffnungen Regelungsmittel zur Regulierung der Rückführung von Feststoff aus der Behandlungskammer in die Reaktionskammer angeordnet sind.

13. Wirbelschichtreaktor-System nach Anspruch 4, **dadurch gekennzeichnet, daß** die Einlaßöffnungen derart beabstandet sind, daß der Abstand zwischen zwei Öffnungen durch das Verhältnis zwischen Höhe der Öffnung und Abstand zwischen zwei Öffnungen festgelegt ist, das größer als 2 ist.

14. Verfahren, in einem zirkulierenden Wirbelschichtreaktor, der eine von einer, durch eine Vielzahl Rohre gebildeten Wandkonstruktion abgegrenzte Reaktionskammer umfasst, einen gemeinsamen Wandabschnitt, der einen Teil der Stützkonstruktion bildet, an der die Reaktionskammer aufgehängt ist, zwischen der zirkulierenden Wirbelschichtreaktorkammer und einer Behandlungskammer neben der zirkulierenden Wirbelschichtreaktorkammer herzustellen, welcher gemeinsame Wandabschnitt eine Ebene bildet, die mit ersten und zweiten Abschnitten vertikaler Dampferzeugerrohre versehen ist, wobei sowohl die ersten als auch zweiten Abschnitte zumindest zwei Dampferzeugerrohre umfassen, **dadurch gekennzeichnet, daß** das Verfahren folgende Schritte umfaßt:
a) Biegung des ersten Rohrabschnitts am gemeinsamen Wandabschnitt an einer ersten vertikalen Stelle aus der Ebene des gemeinsamen Wandabschnitts heraus; um Einlassöffnungen im gemeinsamen Wandabschnitt zu bilden, wodurch Feststoff aus der zirkulierenden Wirbelschichtreaktorkammer direkt in die Aufbereitungskammer eingeführt werden kann;
b) Biegung des ersten Rohrabschnitts am gemeinsamen Wandabschnitt an einer zweiten vertikalen Stelle über der ersten vertikalen Stelle zurück zur Ebene des gemeinsamen Wandabschnittes;
c) Durchführung von Schritt a) und b) an mehreren horizontalen Positionen mit solch einem Abstand dazwischen, daß sich die zweiten Abschnitte über die ersten und zweiten vertikalen Stellen in Ebene des gemeinsamen Wandabschnitts zwischen den Positionen erstrecken können.

15. Verfahren nach Anspruch 14, bei dem die Breite des ersten Abschnitts so gewählt wird, daß das Verhältnis des Abstands zwischen der zweiten und ersten Stelle zur Breite des ersten Abschnitts größer als 2 ist.

16. Verfahren nach Anspruch 14, bei dem die Breite des zweiten Abschnitts so gewählt wird, daß das Verhältnis des Abstands zwischen der zweiten und ersten Stelle zur Breite des zweiten Abschnitts größer als 2 ist.

## Revendications

1. Système de réacteur à lit fluidisé comportant :
- une chambre de réacteur définie par une structure de paroi formée par une pluralité de tubes et des moyens servant à faire passer un milieu caloporteur à travers lesdits tubes pour appliquer de la chaleur aux dits tubes;
- un lit fluidisé rapide de matériau solide dans la chambre de réacteur ;
- une chambre de traitement de matériau solide disposée de façon adjacente à la chambre de réacteur sur le côté extérieur de la structure de paroi définissant ladite chambre de réacteur et comportant des ouvertures d'arrivée;
- un lit fluidisé lent de matériau solide dans la chambre de traitement ;
dans lequel
- la chambre de traitement de matériau solide partage avec ladite chambre de réacteur une partie de paroi commune de la structure de paroi définissant ladite chambre de réacteur, et la partie de paroi commune de la structure de paroi comportant au moins deux ouvertures d'arrivée, ménagées entre des tubes constituant la structure de paroi, s'étendant à travers elle, pour introduire un matériau solide directement à partir du lit fluidisé rapide de la chambre de réacteur dans le lit fluidisé lent de la chambre de traitement ;
- les tubes de la paroi commune formant une partie de la structure de support sur laquelle la chambre de réacteur est suspendue ;
- la structure de paroi étant formée de premières et de secondes portions consécutives de tubes verticaux,
- lesdites premières portions de tubes verticaux au niveau de la partie de paroi commune sont pliées hors du plan de ladite partie de paroi commune pour former des ouvertures d'arrivée dans ladite partie de paroi commune entre les secondes portions restantes des tubes verticaux dans le plan de ladite partie de paroi commune.

2. Système de réacteur à lit fluidisé selon la revendication 1, dans lequel
- la structure de paroi est formée de premières et secondes portions consécutives de tubes verticaux combinées par des ailettes, et
- lesdites premières portions de tubes au niveau de la partie de paroi commune sont pliées hors du plan de ladite partie de paroi commune et à distance de la chambre de réacteur pour former des ouvertures d'arrivée dans ladite partie de paroi commune entre les secondes portions restantes des tubes situées dans le plan de ladite partie de paroi commune.

3. Système de réacteur à lit fluidisé selon la revendication 2, dans lequel les premières portions de tubes pliées hors du plan de la partie de paroi commune forment des parois de limite dans la chambre de traitement.

4. Système de réacteur à lit fluidisé selon la revendication 1 dans lequel une pluralité d'ouvertures d'arrivée verticales, essentiellement parallèles, sont formées au même niveau horizontal dans la partie de paroi commune.

5. Système de réacteur à lit fluidisé selon la revendication 4, dans lequel le rapport de la hauteur à la largeur desdites ouvertures d'arrivée verticales est supérieur à 2.

6. Système de réacteur à lit fluidisé selon la revendication 1, dans lequel les surfaces de transfert thermique sont disposées dans le lit fluidisé lent de particules solides dans la chambre de traitement.

7. Système de réacteur à lit fluidisé selon la revendication 1, dans lequel un chemisage réfractaire est prévu autour des ouvertures d'arrivée.

8. Système de réacteur à lit fluidisé selon la revendication 1, dans lequel les ouvertures d'arrivée sont disposées dans une partie inclinée de la paroi commune.

9. Système de réacteur à lit fluidisé selon la revendication 1, dans lequel des ouvertures de sortie sont formées à travers la partie de paroi commune pour recycler le matériau solide traité par débordement à partir de la chambre de traitement vers la chambre de réacteur.

10. Système de réacteur à lit fluidisé selon la revendication 1, dans lequel des ouvertures de sortie sont formées à travers la partie la plus basse de la partie de paroi commune pour recycler le matériau solide traité en provenance de la chambre de traitement vers la chambre de réacteur.

11. Système de réacteur à lit fluidisé selon la revendication 9 ou 10, dans lequel des moyens de commande sont disposés dans la chambre de traitement pour commander le recyclage du matériau solide provenant de la chambre de traitement vers la chambre de réacteur.

12. Système de réacteur à lit fluidisé selon la revendication 9 ou 10, dans lequel des moyens de commande sont disposés dans les ouvertures de sortie pour commander le recyclage du matériau solide provenant de la chambre de traitement vers la chambre de réacteur.

13. Système de réacteur à lit fluidisé selon la revendication 4 dans lequel les ouvertures d'arrivée sont espacées de façon que la distance entre deux ouvertures soit déterminée par le rapport entre la hauteur de l'ouverture et la distance entre deux ouvertures qui est supérieur à 2.

14. Procédé de fabrication dans un réacteur à lit fluidisé circulant qui comporte une chambre de réacteur définie par une structure de paroi formée d'une pluralité de tubes, une partie de paroi commune constituant une partie de la structure de support sur laquelle la chambre de réacteur est suspendue entre la chambre de réacteur à lit fluidisé circulant et une chambre de traitement adjacente à la chambre de réacteur à lit fluidisé circulant, la partie de paroi commune définissant un plan étant dotée de premières et de secondes portions de tubes verticaux générant de la vapeur, les premières et secondes portions comprenant toutes au moins deux tubes générant de la vapeur, dans lequel le procédé comprend les étapes consistant à :
a) plier ladite première portion des tubes au niveau de la partie de paroi commune hors du plan de ladite partie de paroi commune au niveau d'une première position verticale pour former des ouvertures d'arrivée dans ladite partie de paroi commune afin de permettre une introduction directe du matériau solide provenant de la chambre de réacteur à lit fluidisé circulant dans la chambre de traitement,
b) plier ladite première portion des tubes au niveau de la partie de paroi commune vers l'arrière du plan de ladite partie de paroi commune au niveau d'une seconde position verticale au-dessus de la première position verticale ;
c) mettre en pratique les étapes a) et b) au niveau de plusieurs positions horizontales présentant une distance entre les positions pour que lesdites secondes positions s'étendent au-dessus des premières et des secondes portions verticales dans le plan de la partie de paroi commune entre les positions.

15. Procédé selon la revendication 14, comportant une étape consistant à sélectionner la largeur de ladite première portion de façon que le rapport de la distance entre lesdites seconde et première positions et la largeur de la première portion soit supérieur à 2.

16. Procédé selon la revendication 14, comprenant une étape consistant à sélectionner la largeur de ladite seconde portion de façon que le rapport de la distance entre lesdites seconde et première positions et la largeur de la seconde portion soit supérieur à 2.
